# EUROPEAN PATENT APPLICATION

(11) **EP 1 001 599 A2**
(43) Date of publication of application: **17.05.2000**
(21) Application number: 99308200.7
(22) Date of filing: 18.10.1999
(51) Int. Cl.: H04N 1/04

(54) **Printer with scanner**

(30) Priority: 13.11.1998 GB 9825025
(71) Applicant: ESSELTE N.V., 9100 St. Niklaas (BE)
(72) Inventor: Day, Robert Charles Lewis, Nr. Royston, Herts. SG8 5YR (GB); Kemp, Jonathan, Gamlingay, Cambridge SG19 3LG (GB); Woodward, Adrian Michael, Nr. Royston, Herts SG8 6NT (GB); Archard, Lawrence, Abbotsley, Cambridge PE19 4TY (GB); Sims, Charles Robert, Royston, Herts SG8 7SD (GB); Gibbs, Martin, Udimore, East Sussex TN31 6AR (GB); Heyse, Geert, 2860 Sint Katelijne Waver (BE); Woodman, Michel, Huntingdon, Cambs PE18 0AF (GB); McCleve, Chris, Hammersmith, London W6 9BE (GB)
(74) Representative: Driver, Virginia Rozanne

(57) **Abstract**

A portable printing unit which has a print head mounted in a fixed housing for travel within said housing over a print area also includes a scanning device mounted in the housing for travel within the print area. This allows the combination of scanning and printing functions to be achieved.

## Description

The present invention relates to a combined printer and scanner.

A number of printing devices are known which incorporate a scanner for scanning in data for subsequent printing. The scanned in data can be held in memory onboard the printing device or supplied to a computer memory. Reference is made for example to US 5,012,349, US 4,611,246 and US 4,819,083. In each of these devices, in order to implement scanning and printing, the device must be moved relative to the image receiving medium. The idea is that an image may be scanned in by moving the device over the medium and then the image may be printed at a different location, also by moving the device over the printing medium.

The use of the scanner in these documents is always for receiving data from the medium to be subsequently stored and eventually printed.

A different type of printing device is known for example from EP 564297A that printer has an ink jet print head which scans in two orthogonal directions over the image receiving medium onto which the printer is placed manually. The printer is connected to a computer and capable for example of printing addresses onto envelopes, but can also be used separately from the computer for printing data downloaded from the computer to the printer. It is an aim of the present invention to provide a printer of that type with a scanning function, to allow a number of different scanning/printing possibilities to be realised.

According to one aspect of the present invention there is provided a printer comprising: a housing arranged to be manually positioned on an image receiving medium at a printing location and defining an area over which printing is effected; a print head mounted in said housing for travel within said housing relative to the image receiving medium to effect printing; a scanning device mounted in said housing for travel within said housing relative to the image receiving medium; and a controller for controlling movement of the print head and scanning device.

The invention also provides a printing system which incorporates a printer as hereinabove defined which is connectable to a computer running a software application. According to one embodiment, that software application can receive data scanned in during a scan, use that data to identify one of a number of document types, and generate printing data formatted according to the identified document type.

Another aspect of the invention provides a method of printing an image on an image receiving medium comprising: placing a printer at a printing location on the image receiving medium, the printer comprising a housing defining an area over which printing is effected; effecting a scan of said area by moving a scanning device over said area while maintaining the housing at the printing location; supplying data received during said scan to a computer; and said computer subsequently instigating printing of said image in accordance with the data received during said scan, said printing being effected by moving said print head over said area while maintaining the housing at the printing location.

This method is particularly useful when used to print continuous images over a larger area that the area defined by the housing of the printer. This is done by carrying out a number of sequential scanning and printing operations.

According to another described embodiment, the system can be operated so that a scan is carried out, automatically followed by printing. This could be controlled by the controller of the printer, or by the software application being executed on a host computer in a printing system as outlined above.

For a better understanding of the present invention and to show how the same may be carried into effect, reference will now be made to the accompanying drawings, in which:
Figure 1 is a diagrammatic view showing a printer, a base station and a computer;
Figure 2 is an underside view illustrating scanning operation of the print head;
Figure 3 is a perspective view of the printer in use;
Figure 4 is a perspective view illustrating cooperation of a scanning device with the scanning print head;
Figure 5 is a diagram illustrating how the scanning device can be used sector-wise to print large documents;
Figure 6 is a diagram illustrating how the scanning device can be used to organise data for printing;
Figure 7 is a diagram illustrating how the scanning device can be used to recognise handwriting; and
Figure 8 is a diagrammatic view of an envelope illustrating how the scanning device can be used to detect a zip code and generate a suitable postal franking mark.

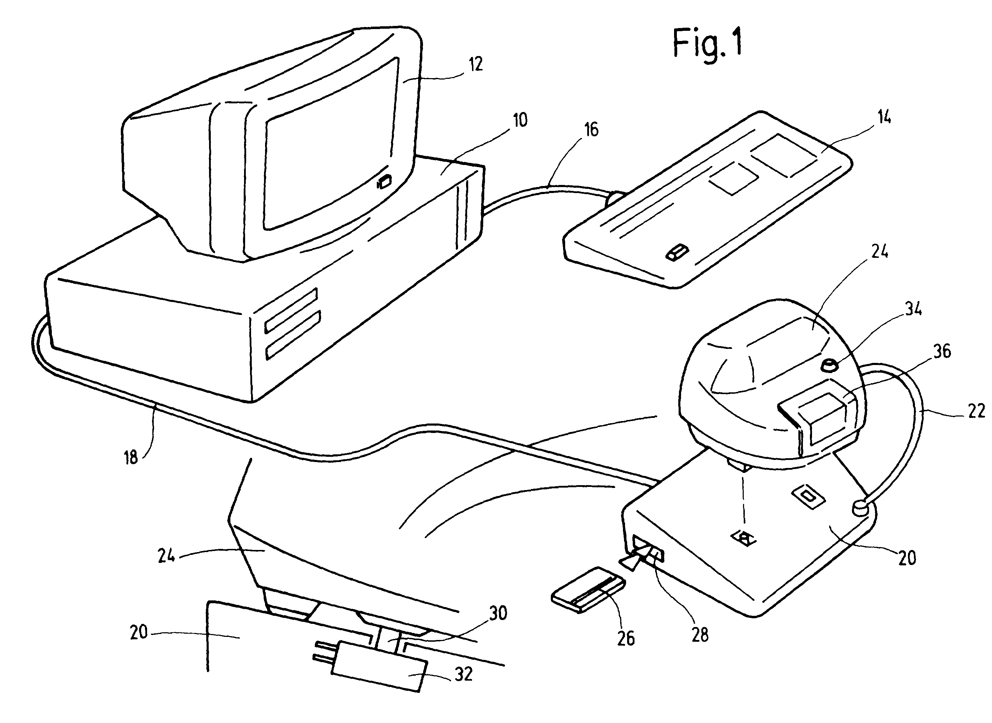

Figure 1 shows a printing system consisting of a computer 10, a computer controlled display 12, which is in the described embodiment of the invention a CRT, a keyboard 14 linked to the computer 10 by means of a cable 16, another cable 18, connecting the computer 10 with a base station 20, which is connected to a printer 24 by means of a cable 22. Thus, the printer 24 is linked to the computer 10 via the cables 18,22 and the base station 20.

As known in the prior art, the computer 10 comprises a processor on which software is running, comprising an operating system, a printer driver to enable printing with the printer 24 from the operating system, and a software application by which data can be created, selected and formatted on the PC, for defining image patterns to be printer by the printer 24. The software application can be activated in a number of ways:
selected by the user at start-up or from the desktop: the user places the software application in the start-up directory or creates an icon on the desktop;
from within another application: the user invokes the software application from a button (displayed on the display 12) in the toolbar of another software application;
from the handheld printer 24 itself: if the application is not running, the user presses a print button 34 on the handheld printer 24, which will automatically invoke the software application in the first instance.

Another possibility to activate the software application on the computer 10 for controlling the printer 24 is to lift the printer 24 off the base station 20. A switch 32 is provided in the base station 24 sensing the presence or absence of the printer 24 by means of a pin 30. When the printer 24 is placed upon the base station, the pin 30 is depressed, and the switch 32 is open. In the case that the printer 24 is removed from the base station 20, the pin 30 which is biased in the vertical direction moves upwardly and the switch 32 opens. The switch is connected via some electronic circuits to the computer 18 and activates the software application for printing.

The base station 20 is connected to the computer 10 by means of the cable 18, which can be a parallel or a USB cable. Electric power is supplied to the base station 20 by a separate mains transformer, but could also be supplied from the computer via the cable 18, preferably when the cable is a USB cable. The cable 18 can be hard-wired to the base station 20, or connected to a socket of the base station, which is preferably provided at the rear thereof. When the printer 24 is not in use, the handheld printer will be placed in the base station 20. The base station 20 will ensure that the ink jet print head of the printer 24 is protected when not in use by a capping device that will be automatically triggered whenever the printer is inserted into the base station 20. The base station 20 will also cause the print head of the printer 24 to eject ink into a reservoir and mechanically clean the surface of the print head. These measures are necessary to maintain optimum print quality.

The umbilical cable 22 connects the base station 20 to the handheld printer 24, providing both power and data. A LED on the printer will indicate that power is on. The printer 24 is removed from the base station 24 and positioned on the surface to be printed. The length of the cable 22 limits the distance of travel from the base station.

In another embodiment of the invention, the printer is arranged to be disconnected from the base station by unplugging the umbilical cable 22 and moved to another location where printing of the contents of onboard memory, i.e. downloaded image data, can be effected. The user will employ scroll buttons on the printer to select the required print data, which appear in a small LCD. Once a selection has been made, pressing the print button 34 will activate printing. Having selected the data to print using the software application (or the scroll buttons on the printer), the user will activate printing from the print button 34 on the handheld printer 24 itself.

Print alignment is achieved visually through a transparent window 36 in the printer casing. This window 36 can also be opened for inserting an ink cartridge into the printer 24 before use. The cartridge is then clamped in a carriage of the printer 24. The window 36 must be closed before printing. The user can choose from a range of coloured and special inks. Changing a cartridge is achieved by lifting a retaining lever and extracting the cartridge in use and replacing this with a new or different colour cartridge in the way described above. If the removed cartridge still contains ink and is to be reused it must be capped to avoid the ink drying out.

The printer 24 contains a print mechanism with the ink jet print head having a number of print nozzles, and an ink supply. The print head is moved by means of motor driven scanning means within the housing in two (generally orthogonal) directions such that a rectangular area can be imprinted through an aperture of the printer 24 at the bottom of its housing. Thus, the printer 24 is placed manually on an image receiving medium and - when the print button 34 is depressed - the print head scans over the medium and imprints it by spitting ink droplets onto it.

Figure 1 shows the printer 24, base station 20 and computer 10 linked by cables. In an embodiment, it is possible to replace one or all of these links by a wireless link such as a low power RF link or an infra red link. Figure 1 also shows the presence of a "Smart Card" reader 28 in the base station 20. Smart cards 26, i.e. memory cards, may be used for storing data or images or as a substitute for additional RAM in the base station. Spare cards may be stored within the base station where a storage compartment is provided (not shown).

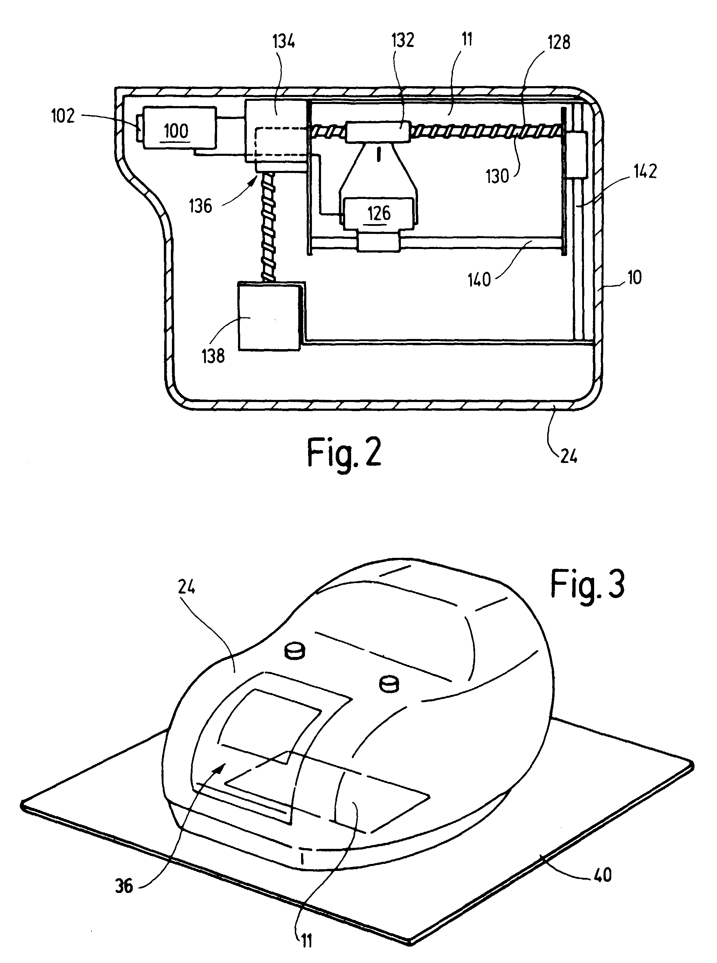

In another embodiment, a printer is provided which can only be used as a stand-alone device, i.e. in cooperation with a base station. The functionality of the printer is then as follows: the user removes the printer from the base station. A single button 36 (see Figure 2) will switch the printer on and off, and a LED on the printer will indicate that power is on. A ROM card is printed with images of its content and the sequence of images provided on the ROM card is indicated numerically on a display of the printer. Thus, the user will select the desired image using scroll buttons to scroll forward or backwards through the numbered content. The user will activate printing from the button 36 on the handheld printer itself.

The print mechanism of the printer will now be described with reference to Figure 2. The printer 24 has a housing 10, the underside of which can be abutted against the surface of the image receiving medium to be printed. A print face 11 is defined by the scanning range of an ink jet print head cartridge 126 which can be replaced using the cartridge release mechanism described above. The ink jet print head cartridge 126 is mounted for movement along a write axis 128 by virtue of a cooperating lead screw 130 and nut 132. The movement is controlled by a stepper motor 134. The position of the writing axis 128 can be altered by an indexing axis lead screw and bush 136 controlled by a further stepper motor 138. Reference numeral 140 designates a stability bar which extends parallel to the write axis 128, the ink jet print head cartridge 126 being mounted between the write axis 128 and the stability bar 140. Reference numeral 142 designates an indexing axis stability bar and bush.

The printer also includes an electronic controller 100 having a microprocessor for controlling movement of the stepper motor 34 and generating signals for controlling the print head and having a buffer memory for storing data. The microprocessor is capable of converting data from a computer to which the device is connected into a format suitable for driving the print head. The buffer memory can store information in a variety of formats to enable the printer to work with a variety of computer equipment.

In Figure 3, a printer 24 positioned on an image receiving medium 40 is shown ready for use. That is, it has been removed from the base station 20 and placed on the medium 40 to be printed. In doing so, the application software is automatically initiated to allow printing data to be selected and configured by a user using the computer 12 and keyboard 14.

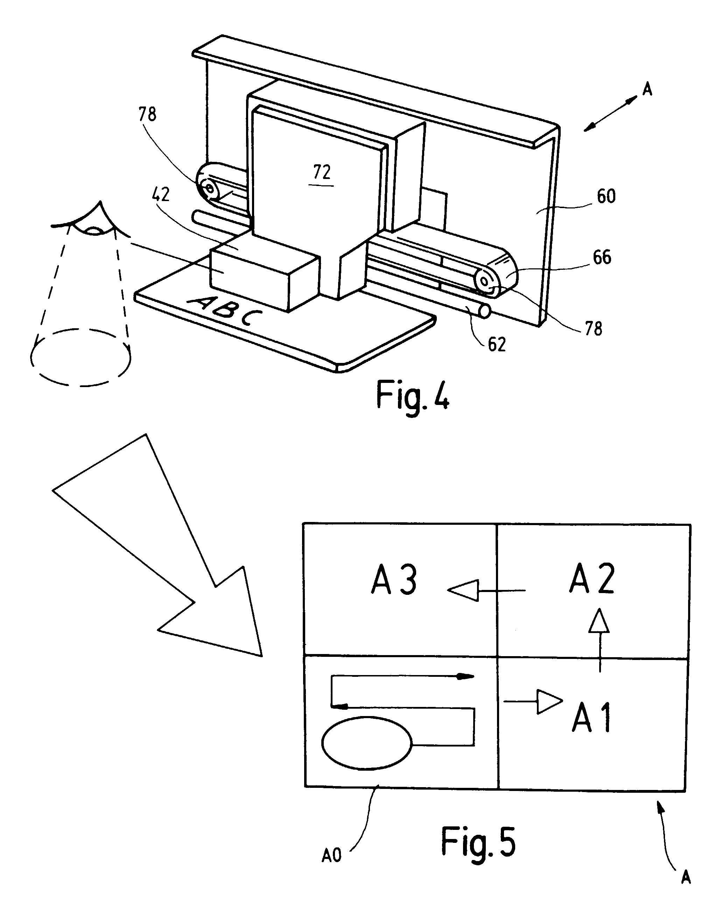

In accordance with various embodiments of the invention, the printer 24 is provided with a scanning device 42 (Figure 4) for scanning image patterns into a memory. In this case, the scanner may be used to align the print window with reference features on the substrate. Thus, the scanner could scan the print face 11, and detect vertical and/or horizontal lines. Visual indications could then be presented to the user to help them align the printer with the desired print area. Thus, the printer would have display means indicating the user in which direction the printer 24 should be moved in order to obtain parallelity between the print face 11 and a vertical or horizontal line (or another feature provided on the image receiving medium, as one or more crosses) detected by the scanner. Examples include arrows on a display of the printer or a computer to which the printer is connected) or flashing LEDs to indicate in which direction to move the printer for better print alignment.

Figure 4 illustrates how a print cartridge 72 is mounted in the printer 24. A metal (or plastics) base plate 60 is mounted for scanning motion along the direction indicated by arrow A. The necessary mechanism for scanning in this direction is not shown in Figure 4, for the sake of clarity. On the base plate 60, a guide rail 62 is provided. The guide rail 62 extends in a direction which is orthogonal to the direction of movement of the plate 60. Additionally, two wheels 78 are provided, around which a drive belt 66 is located. The drive belt 66 is preferably toothed and extends parallel to the guide rail 62. The print cartridge 72 provided with an ink supply and nozzles for spitting the ink onto an image receiving medium is secured to the guide rail 62 by snap-on bearings (not shown). Thus, the cartridge 72 can travel along the longitudinal axis of the guide rail. When the belt is driven (by means of a corresponding motor, not shown in Figure 4 for the sake of clarity, but it could drive the belt 66 through the rectangular window in the base plate 60), the cartridge 72 travels along the guide rail 62.

The base plate 60 and the pins on which the wheels 78 are mounted, and the guide rails 62,64 are unitary. Thus, the base plate 60 is produced as a unitary unit, e.g. by die casting, in order to simplify construction and minimise component cost. It should be noted that a movement along the direction indicated by the arrow A is not necessary when the cartridge 72 contains a print head having a width sufficient to print the entire image receiving medium in one scan.

Printing is accomplished by scanning the print head over the medium. Most ink jet printers known in the prior art accelerate the print cartridge from rest to normal printing speed prior to firing the ink droplets. This simplifies the control of ink droplet spacing but the additional space required to accelerate the print cartridge increases the overall size of the product. The printer described here is handheld and thus required that the overall dimensions are minimised. The control system of the print cartridge 72 thus provides the ability to print as the print cartridge assembly is accelerating - during printing of the left margin 90 of the image receiving medium 48' - and decelerating - during printing of the right margin 90' of the image receiving medium 48' - at the start and finish of each sweep of the mechanism thus enabling the product dimensions to be minimised for a given size of the print area on the image receiving medium.

Figure 4 also illustrates how the scanning device 42 is attached to the print head cartridge 72 and moves with it. The scanning device can be for example a linear array (line scan camera) or CCD. When the printer 24 is placed upon a substrate 40 as illustrated in Figure 3, a scanning mode can first be selected which causes the print head cartridge 72 to move in the X and Y directions with the scanning device 42 such that the scanning device 42 scans a surface. The image received by the scanning device is then processed by the software application which determines whether the substrate is, say, a label, envelope or other type of document. Having identified the document type, the software application then formats the output to be printed to match the document type. The document type can be recognised based on its size or shape. Alternatively, markings on the document can be recognised by the scanning device 42 to identify it as a particular document type. Once a document type has been identified, the software application can automatically switch from a scanning mode to a printing mode to print the formatted printed output matching the document type.

Figure 5 illustrates how the scanning device 42 can be used on documents with an area which is larger than the scanning/printing area defined by the aperture of the printer 24 itself. That is, the printer 24 is first aligned to the start position of part of the overall printing area, in the example of Figure 5 being the sector A0 at the bottom left hand corner of the overall document area A. That area A0 is printed by the scanning print head cartridge 72 as denoted by the arrows in the sector A0. The printer is then moved to the next adjacent position, in this case the sector A1 of Figure 5. The scanning device scans the printing area and locates the edge of the previously printed area. The software application then adjust the position of the next printed area to correctly abut the previously printed area such that the part of the image to be printed in the sector A1 is properly located adjacent that which has just been printed in the sector A0. These sequential operations are carried out for the remaining sectors A2 and A3 of the overall document area A. That is, a sequence of operations is effected, each time with the scanning device 42 scanning the area to identify the previously printed data, and then the print head 72 being caused to resume printing again in the correct position of the appropriate next part of the image.

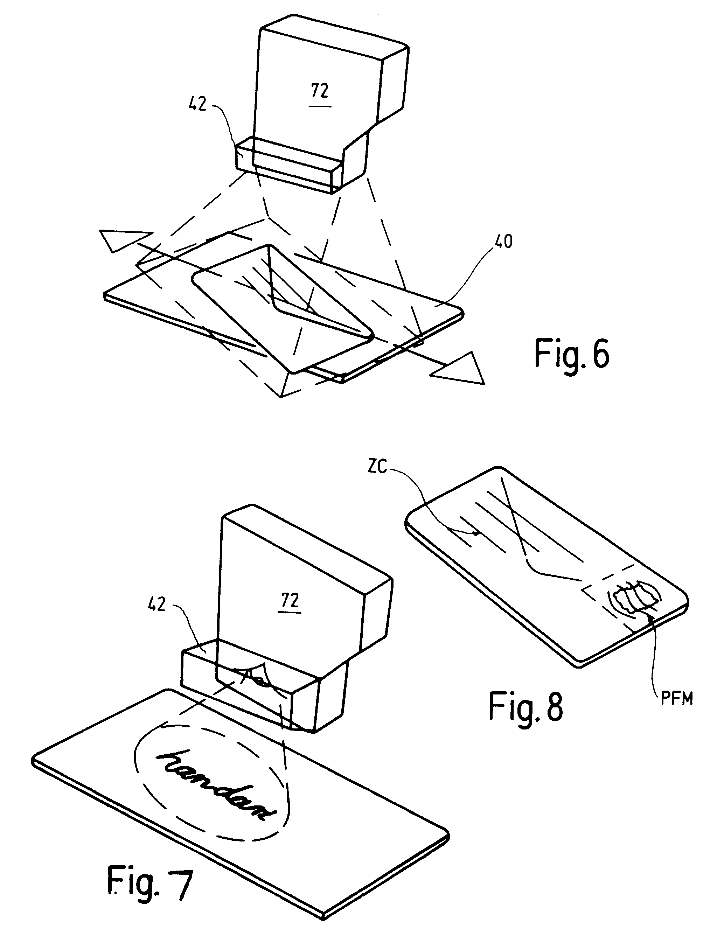

Alternatively, as illustrated in Figure 6, the scanning device 42 may scan an area and the software application then determines what space is available to print in. The printing may then be scaled to fit the space available or justified or aligned to a particular reference.

As illustrated in Figure 7, the scanning device may also be used for other tasks such as handwriting recognition or optical character recognition. For example, it would be possible to scan in addresses from business cards and add them to a database.

As illustrated for example in Figure 8, the printer 24 may also, with the use of suitable inks and control software, be capable of printing postal franking marks. In such cases, the scanning device 42 could be set up to read a zip code ZC and this information could then be processed and used to generate and print the correct postal franking mark and value, PFM.

## Claims

1. A printer comprising:
a housing arranged to be manually positioned on an image receiving medium at a printing location and defining an area over which printing is effected;
a print head mounted in said housing for travel within said housing relative to the image receiving medium to effect printing;
a scanning device mounted in said housing for travel within said housing relative to the image receiving medium; and
a controller for controlling movement of the print head and scanning device.

2. A printing system comprising:
a printer according to claim 1; and
a computer connectable to the printer and configured to execute a software application for controlling the printer.

3. A printing system according to claim 2, wherein the scanning device is operable to read data from the image receiving medium and to supply said data to the computer, wherein the software application is operable to identify from a number of different document types, the document type constituted by the image receiving medium in dependence on the data, and to generate printing data according to a printing format associated with said document type.

4. A printing system according to claim 2 or 3, wherein the controller operates in communication with the computer to implement a scan of the printable area of the image receiving medium sequentially followed by actuation of the print head to print an image over said printable area.

5. A method of printing an image on an image receiving medium comprising:
placing a printer at a printing location on the image receiving medium, the printer comprising a housing defining an area over which printing is effected;
effecting a scan of said area by moving a scanning device over said area while maintaining the housing at the printing location;
supplying data received during said scan to a computer; and
said computer subsequently instigating printing of said image in accordance with the data received during said scan, said printing being effected by moving said print head over said area while maintaining the housing at the printing location.

6. A method according to claim 5, wherein said data defines the image receiving medium as one of a plurality of predetermined document types, and wherein the computer generates printing data for printing in accordance with the identified document type.

7. A method according to claim 5 or 6, when used to print a single continuous image over an area which is larger than the area defined by said housing, by carrying out a sequence of scanning and printing operations.

8. A method according to claim 7, wherein each scanning operation determines the edge of print printed by the previous printing operation so as to locate a subsequent printing location for the next printing operation.
